# EUROPEAN PATENT SPECIFICATION

(11) **EP 4 563 831 B1**
(45) Date of publication and mention of the grant of the patent: **15.04.2026**
(21) Application number: 23212924.7
(22) Date of filing: 29.11.2023
(51) Int. Cl.: F16B 25/00, F16B 25/10, F16B 35/06

(54) **SCREW**
SCHRAUBE
VIS

(43) Date of publication of application: 04.06.2025
(73) Proprietor: Taiwan Shan Yin International Co., Ltd., Kaohsiung City 820 (TW)
(72) Inventor: SU, Kou-Tsair, 806 Kaohsiung City (TW); SU, Chen-Long, 800 Kaohsiung City (TW)
(74) Representative: Cabinet Chaillot

(56) References cited:
- EP-A1- 3 249 244
- EP-B1- 3 163 097
- US-A1- 2017 016 467
- US-A1- 2023 048 078
- US-B1- 6 698 987

## Description

### BACKGROUND OF THE INVENTION

### 1. Field of the Invention

This invention relates to a screw and relates particularly to a screw having a special drilling configuration.

### 2. Description of the Related Art

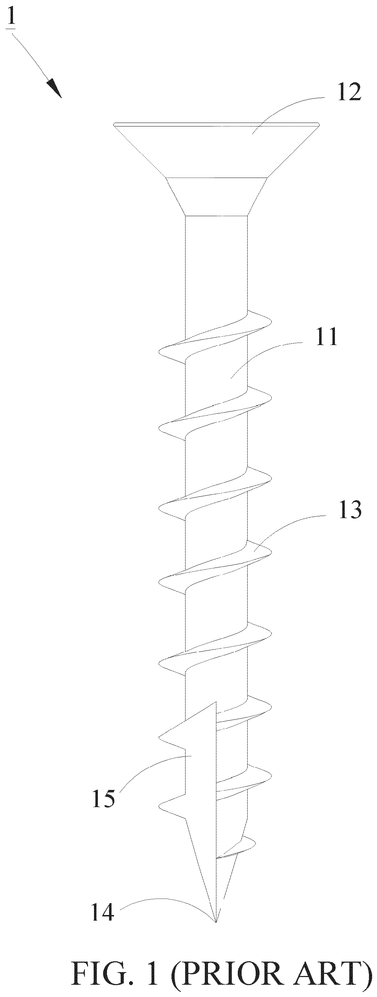

Referring to Fig. **1****,** a conventional screw **1** includes a shank **11,** a head **12** connected to the shank **11,** and a plurality of threads **13** spiraling around the shank **11.** The shank **11** tapers to form a tip **14** opposite to the head **12** and has at least one groove **15** formed thereon. In operation, the head **12** is rotated to drill the shank **12** and the threads **13** into a workpiece, such as wood (not shown) . The groove **15** serves to cut the workpiece and accommodate chips caused by cutting, thereby completing a screwing operation. However, the cutting effect of the groove **15** is usually limited, so fibers cannot be efficiently severed. The groove **15** also fails to help quick removal of the chips and has a limited area for receiving residual chips. Thus, the accumulation of the chips blocks the groove **15** easily and causes larger resistance against the screwing operation. The excessive accumulation of the chips also adds undue pressure to the workpiece, which causes the workpiece to crack easily. Thus, the screw **1** needs to be improved.

US 6 698 987 B1 discloses a self-drilling and thread-forming connecting element, in particular a screw. A threaded shank of the screw includes a cylindrical core, a thread formed on the core, and an end drilling tip for drilling a core hole for the thread. The end drilling tip has a roughly conically tapering inclined surface, two diametrically opposite cutting edges starting from a spot drilling point, and a flute extending approximately axially in the direction of the threaded shank to be upstream of each cutting edge as viewed in the screw-in direction, with each flute interrupting the run of the thread. The drilling tip defines a core-hole drilling diameter which is larger than a core diameter of the cylindrical core.

### SUMMARY OF THE INVENTION

An object of this invention is to provide a screw capable of reaming, reducing drilling resistance for a quick drilling operation, and attaining a stable fastening effect.

A screw of this invention is as defined in claim 1 and includes a head, a shank extending longitudinally from the head, a thread unit spirally disposed on the shank, and a drill portion connected to the shank. The shank defines a central axis. The drill portion includes a drill body connected to the shank, two opposite groove regions recessed into the drill body, and two opposite drilling regions formed on the drill body. The drill body has an end portion located in opposing relationship to the shank. Each groove region includes at least one groove wall. Each drilling region includes a cutting unit formed on a first side of one groove region, a first join wall connected to a second side of the groove region, and a second join wall formed between the first join wall and the other groove region. The cutting unit includes a connecting section extending outwards from the first side of the groove region and a cutting edge section connected to the connecting section and extending inclinedly in an extension direction opposite to the shank. One cutting edge section of one cutting unit and the other cutting edge section of the other cutting unit converge at the end portion. The connecting section and the cutting edge section of the cutting unit converge at one junction, and the other connecting section and the other cutting edge section of the other cutting unit converge at the other junction. A first distance is defined from the junction to the other junction. The first distance is greater than the outer diameter of the shank. The first join wall has a slanted surface inclined to the central axis, thereby allowing a thickness of the drill body to be gradually reduced towards the end portion when viewed from the cutting edge section.

In accordance with the above arrangement, the larger first diameter defined by the outward extensions of the opposite cutting units coexists with the gradually-reduced thickness to help enlarge a drilled hole while drilling and subject a workpiece to an efficient cutting operation so that the drill portion is quickly drilled into the workpiece. The above conditions also provide an area sufficient to receive and move chips caused by the cutting operation. Accordingly, the quick cutting effect and quick removal of chips can be attained. The thread unit continues the cutting operation so that the thread unit can be engaged with the workpiece. According to the claimed configuration, a stable fastening effect can be attained to prevent the screw from getting loose easily.

Preferably, each groove region can include two groove walls. For example, each groove region includes a first groove wall joined to an outer periphery of the drill body and a second groove wall connected to the first groove wall. Accordingly, each connecting section of the cutting unit, preferably curved in shape, extends outwards from each first groove wall, and each first join wall is connected to each second groove wall.

Preferably, the cutting edge section can include a cutting edge extending inclinedly and a trailing wall joined to the cutting edge. In particular, each trailing wall extends backwards from a cutting edge corresponding to the trailing wall. That is, the trailing wall extends in a direction opposite to the groove region related to the corresponding cutting edge. One cutting edge of one cutting unit and the other cutting edge of the other cutting unit converge at the end portion.

Preferably, the second join wall can be inclined to the central axis, and the thread unit can be connected to one of the groove regions, thereby removing chips and increasing the strength of the screw structure.

Preferably, a plurality of curved recesses can be formed on an underside of the head, and a connecting edge can be formed between two adjacent recesses, thereby achieving a close combination between the head and the workpiece.

Preferably, an auxiliary portion can be spirally disposed on the shank and located between the thread unit and the head, and a spiral angle defined by the auxiliary portion can be different from a spiral angle defined by the thread unit to continue the cutting operation.

The thread unit includes a plurality of threads spirally winding around the outer periphery of the shank. Preferably, a plurality of ribs can be located between the threads and formed by protruding outwards from the outer periphery of the shank. It is also possible to form a plurality of notches on the threads. Accordingly, the ribs, the notches, or the coexistence of the ribs and the notches can assist the thread unit in cutting to attain an auxiliary cutting effect.

### BRIEF DESCRIPTION OF THE DRAWINGS

- Fig. 1: is a schematic view showing a conventional screw;
- Fig. 2: is a perspective view showing a first preferred embodiment of this invention;
- Fig. 2A: is an enlarged view showing an encircled portion X1 of Fig. 2;
- Fig. 3: is a front elevational view of Fig. 2;
- Fig. 3A: is an enlarged view showing an encircled portion X2 of Fig. 3;
- Fig. 4: is a right side view of Fig. 2;
- Fig. 4A: is an enlarged view showing an encircled portion X3 of Fig. 4;
- Fig. 5: is a bottom plan view of Fig. 2;
- Fig. 6: is a schematic view showing the first preferred embodiment in use; and
- Fig. 7: is a partial schematic view showing the first preferred embodiment in use.

### DETAILED DESCRIPTION OF THE PREFERRED EMBODIMENTS

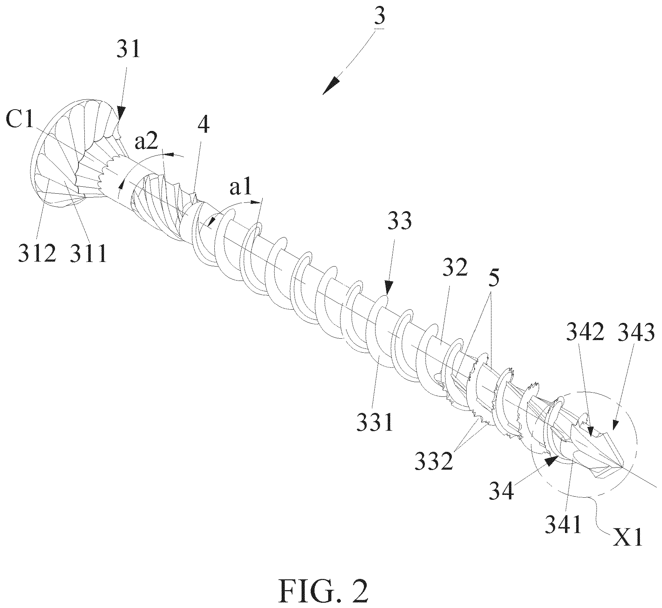

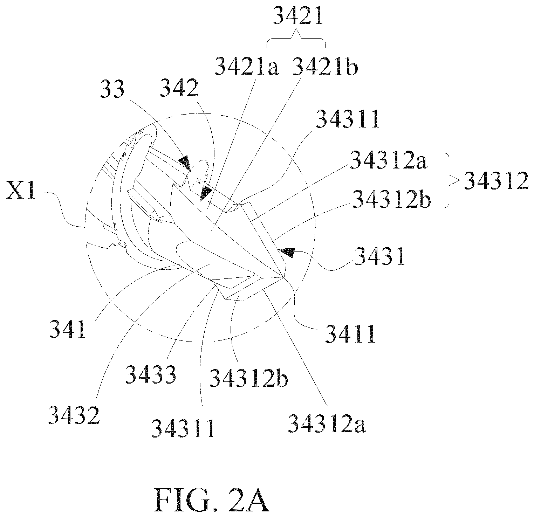

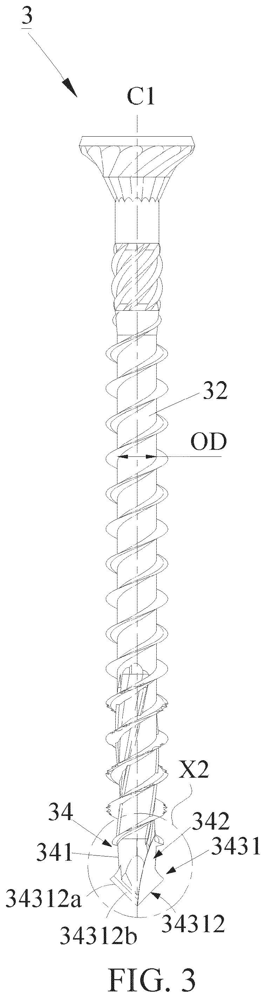

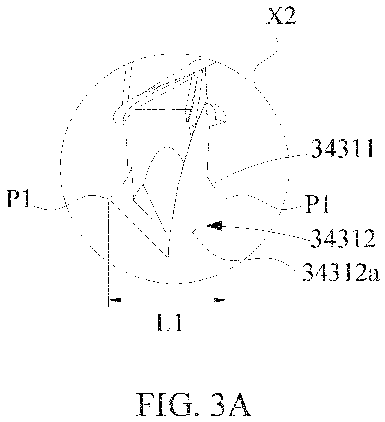

Referring to Fig. **2** and Fig. **3****,** a first preferred embodiment of the screw **3** is shown. The screw **3** includes a head **31,** a shank **32** extending longitudinally from the head **31,** a thread unit **33** spirally disposed on the shank **32,** and a drill portion **34** connected to the shank **32.** Specifically, the appearance of the head **31** is adjustable to meet demand. For example, a plurality of recesses **311** can be formed on a bottom surface of the head **31,** and a connecting edge **312** can be formed between two adjacent recesses **311.** The recess **311** can have an inward curved surface whereby the recess **311** is curved in shape. The recesses **311** and the connecting edges **312** assist the head **31** in being closely engaged with a workpiece **6.** Furthermore, the shank **32** extends axially from the head **31** and defines a central axis **C1.** An outer periphery of the shank **32** also defines an outer diameter **OD.** An auxiliary thread **4** can be properly disposed on the shank **32** and located between the thread unit **33** and the head **31.** A helical angle **a2** defined by the auxiliary thread **4** is different from a spiral angle **a1** of any thread **331** of the thread unit **33,** so the auxiliary thread **4** follows the thread unit **33** and continues the cutting action for further drilling.

Furthermore, the thread unit **33** includes a plurality of threads **331** spirally disposed around the outer periphery of the shank **32.** In this preferred embodiment, located between the threads **331** can be formed a plurality of ribs **5** which protrude outwards from the outer periphery of the shank **32.** It is also possible that a plurality of notches **332** can be formed on the threads **331.** The ribs **5** and the notches **332** serve to assist the thread unit **33** in cutting, thereby attaining an auxiliary cutting effect.

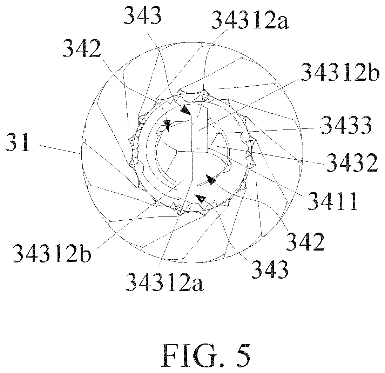

The drill portion **34** includes a drill body **341,** two groove regions **342,** and two drilling regions **343.** Referring to Fig. **2A** and Fig. **5****,** the drill body **341** is connected to the shank **32.** Explicitly, the drill body **341** extends outwards from the shank **32** and includes an end portion **3411** located in opposing relationship to the shank **32.** Two opposite groove regions **342** are recessedly formed. In other words, the groove regions **342** are recessed into the drill body **341.** Each groove region **342** has at least one groove wall **3421.** Accordingly, the groove region **342** serves as an accommodation area enclosed by at least one groove wall **3421;** that is, a single groove wall **3421** or more than one groove wall **3421.** In this preferred embodiment, two groove walls **3421** are adopted as an example. Specifically, each groove region **342** can include a first groove wall **3421a** joined to an outer periphery of the drill body **341** and a second groove wall **3421b** connected to the first groove wall **3421a.** The thread unit **33** can be connected to the groove region **342,** and preferably one end of the thread unit **33** can be connected to at least one groove wall **3421** of one of the groove regions **342.** According to Fig. **2A** where two groove walls **3421** are shown, one end of the thread unit **33** can be connected to the first groove wall **3421a** of one groove region **342,** thereby accommodating chips, guiding and removing chips, and preventing the undue accumulation of the chips.

Two opposite drilling regions **343** are formed on the drill body **341.** Each drilling region **343** includes a cutting unit **3431** and a first join wall **3432** respectively formed on two sides of one groove region **342.** That is, the cutting unit **3431** is formed on a first side of the groove region **342,** and the first join wall **3432** is connected to a second side of the groove region **342.** The drilling region **343** also includes a second join wall **3433** connected to the first join wall **3432.** Furthermore, the cutting unit **3431** includes a connecting section **34311** extending outwards from the first side of the groove region **342.** In this preferred embodiment, when the groove region **342** has two groove walls **3421,** the first side is defined by the first groove wall **3421a,** and the second side is defined by the second groove wall **3421b.** Accordingly, the connecting section **34311** is formed in a protruding manner. In other words, the connecting section **34311** extends outwards from the first groove wall **3421a,** and it is also possible that the first join wall **3432** is connected to the second groove wall **3421b.** According to the invention, the second join wall **3433** is formed between the first join wall **3432** and the other groove region **342,** as shown in the figures that a second join wall **3433** of one drilling region **343** is formed between a first join wall **3432** to which the second join wall **3433** is connected and the other cutting unit **3431** of the other drilling region **343.**

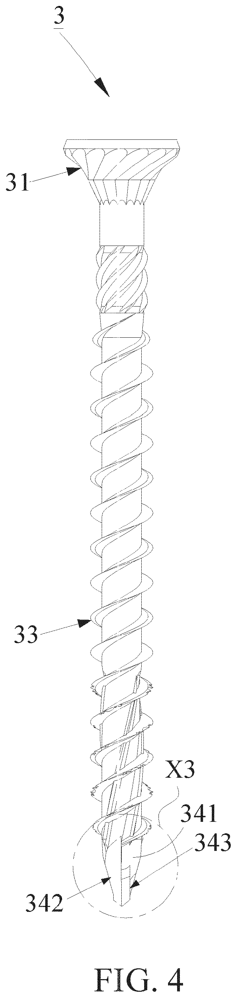

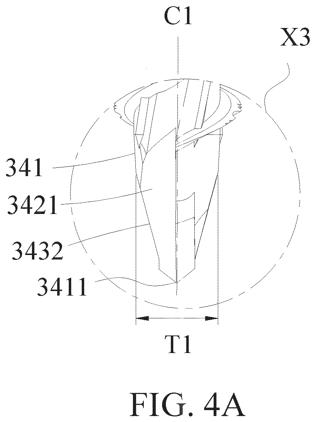

In this preferred embodiment, the connecting section **3433** can be, but not limited to, curved in shape (shown in Fig. **3** and Fig. **3A** where an inward curved contour is shown), and the second join wall **3433** can have a slanted surface inclined to the central axis **C1.** The above conditions help increase the strength of the screw structure. Furthermore, the first join wall **3432** has a slanted surface inclined to the central axis **C1,** and therefore the thickness **T1** of the drill body **341,** shown in the side view illustrated by Fig. **4** and Fig. **4A****,** is gradually reduced in the direction of the end portion **3411** when viewed from the cutting edge section **34312** which will be described as follows. That is, the drill body **341** narrows gradually from the shank **32** towards the end portion **3411.**

The cutting unit **3431** also includes a cutting edge section **34312** connected to the connecting section **34311.** The cutting edge section **34312** extends in an inclined manner, so the cutting edge section **34312** extends in an inclination direction opposite to the shank **32.** Accordingly, regarding the two drilling regions **343,** the end portion **3411** is a place where the cutting edge section **34312** of one cutting unit **3431** and the other cutting edge section **34312** of the other cutting unit **3431** meet. In this preferred embodiment, the cutting edge section **34312** can include a cutting edge **34312a** extending inclinedly in the extension direction, which allows the cutting edge **34312a** of one cutting edge section **34312** and the other cutting edge **34312a** of the other cutting unit **34312** to converge at the end portion **3411** so that the end portion **3411** serves as a drilling tip.

The cutting edge section **34312** also includes a trailing wall **34312b** joined to the cutting edge **34312a.** The trailing wall **34312b** extends in a direction opposite to the groove region **342.** That is, the trailing wall **34312b** is a wall extending backwards from a corresponding cutting edge **34312a** to which the trailing wall **34312b** is joined, as shown in Fig. **4** and Fig. **5****.** Overall, the trailing wall **34312b** of one drilling region **343** is formed between the corresponding cutting edge **34312a** of the drilling region **343** and the other second join wall **3433** of the other drilling region **343.** Preferably, the trailing wall **34312b** can be inclined to the central axis C1 to strengthen the structure of the corresponding cutting edge **34312a,** thereby increasing the cutting strength of each drilling region **343.**

Referring to the front elevational view illustrated by Fig. **3** and Fig. **3A****,** the connecting section **34311** of one cutting unit **3431** and the cutting edge section **34312** thereof converge at one junction **P1**. The junction **P1** can be a point where the connecting section **34311** and the cutting edge section **34312** meet. The other connecting section **34311** of the other cutting unit **3431** and the other cutting edge section **34312** thereof converge at the other junction **P1**. A length between the two junctions **P1** is defined as a first distance **L1.** The first distance **L1 is** greater than the outer diameter **OD** of the shank **32.** Overall, the maximum width of the drilling region **343,** namely the first distance **L1,** is larger than the outer diameter of the shank **32,** and the width of the drilling region **343** is gradually reduced towards the end portion **3411.** Consequently, the drill portion **34** as a whole presents a structure which is wide in the front view and narrow in the side view because of the coexistence of the first distance **L1** and the inclination of the first join wall **3432.**

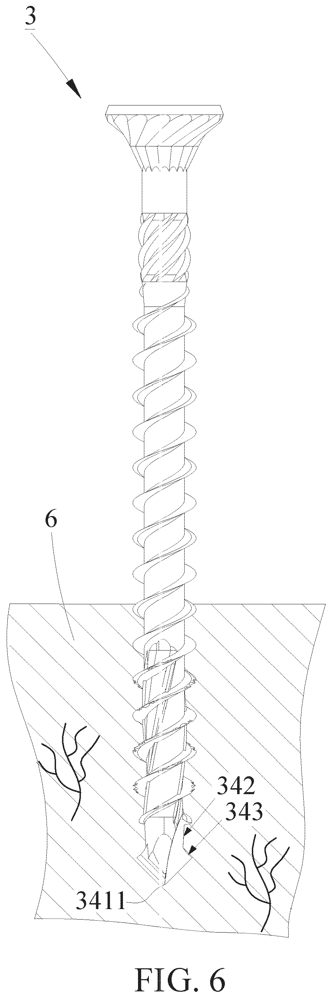

The operation of this invention is described with the aid of Figs. **2** to **6****.** The screw **3** is adapted to be drilled into a workpiece **6** made of iron, wood, etc., and herein the workpiece **6** made of wood is taken as an example. In use, the end portion **3411** is put against a surface of the workpiece **6,** and then the head **31** is rotated to execute a drilling operation. At the beginning of the drilling operation, internal fibers of the workpiece **6** are cut by two cutting edge sections **34312.** Explicitly, the cutting edges **34312a** cooperate with the groove regions **342** to carry out a cutting action whereby the fibers are cut and severed, with the result that the cutting action reduces the friction between the workpiece **6** and the drill portion **34.** During the process of cutting the fibers, a drilled hole is formed in the workpiece **6.** The first distance **L1** defined by the outward extensions of the cutting units **3431** of the drilling regions **343** can help enlarge a hole diameter of the drilled hole for attaining a reaming effect. Meanwhile, the gradually-reduced thickness **T1** caused by the two slanted first join walls **3432** not only allows the drilling regions **343** and the groove regions **342** to be easily drilled into the drilled hole but also provides an area sufficient to accommodate adequate chips cut by the cutting action. Accordingly, the drill body **341** can be quickly driven and drilled into the workpiece **6,** and therefore the drill portion **34** can be stably engaged with the workpiece **6** during the initial drilling operation.

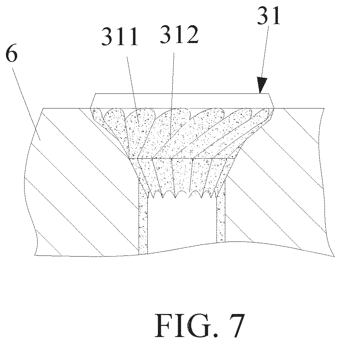

During the drilling operation of the drill portion **34,** chips are generated while cutting the fibers with the cutting edge sections **34312** and the groove regions **342.** At this moment, the coexistence of the first distance **L1** and the accommodation areas respectively enclosed by the groove regions **342** serve to receive the chips and help removal of the chips, thereby preventing the cracking problem of the workpiece **6** caused by undue accumulation and outward pushing force of the chips. In other words, the workpiece **6** does not crack easily. Then, because the thread unit **33** is connected to the groove region **342,** the thread unit **33** enters the workpiece **6** directly by following a spiral track created by the drilling of the drilling regions **343.** Thus, the drilling resistance can be efficiently reduced. Meanwhile, the thread unit **33** is engaged with the workpiece **6** and keeps drilling into the workpiece **6** by cutting. In addition, the chips enter the groove regions **342,** then go into the shank **32,** and thence move along a spiral direction of the thread unit **33.** Finally, multiple chips are pushed out of the head **31,** thereby attaining the removal of chips. Furthermore, the recesses **311** and the connecting edges **312** function to scrape off burrs accumulated around an exit of the drilled hole, which not only prevents the burrs from breaking the combination between the head **31** and the workpiece **6** but also provides a larger area for accommodating adequate chips, as shown in Fig. **7****.** According to the combination of the above correlated elements, the screw **3** increases the drilling efficiency, attains the quick removal of chips, and prevents the workpiece **6** from cracking. A stable fastening effect is achieved by receiving sufficient chips so that the screw **3** does not get loose easily. Therefore, an anti-loosening effect is also achieved.

To sum up, this invention takes advantage of outward extensions of the opposite cutting units and the gradually-reduced thickness caused by inclined first join walls to allow the drill portion as a whole to present a strengthened structure which is not only wide but also narrow. Consequently, the drill portion assists the screw in reaming for attaining a quick drilling effect, subjects a workpiece to a quick cutting operation, and accommodates and removes chips efficiently, thereby attaining a stable fastening effect and an anti-loosening effect.

While the embodiments are shown and described above, it is understood that further variations and modifications may be made without departing from the scope of this invention as defined by the appended claims.

## Claims

1. A screw (3) comprising:
a head (31);
a shank (32) extending longitudinally from said head (31) and defining a central axis (C1), wherein an outer periphery of said shank (32) defines an outer diameter (OD);
a thread unit (33) spirally disposed on said shank (32); and
a drill portion (34) connected to said shank (32);
wherein said drill portion (34) includes a drill body (341) connected to said shank (32), two opposite groove regions (342) recessed into said drill body (341), and two opposite drilling regions (343) formed on said drill body (341), said drill body (341) including an end portion (3411) located in opposing relationship to said shank (32), each of said groove regions (342) including at least one groove wall (3421), each of said drilling regions (343) including a cutting unit (3431) defining a first distance (L1) which is greater than said outer diameter (OD) of said shank (32), said cutting unit (3431) including a cutting edge section (34312) formed on a first side of one of said groove regions (342),
wherein each of said drilling regions (343) includes a first join wall (3432) connected to a second side of said one groove region (342), and a second join wall (3433) formed between said first join wall (3432) and another one of said groove regions (342), with said first join wall (3432) connected to said second join wall (3433) and extended in the direction of said end portion (3411), said cutting unit (3431) including a connecting section (34311) extending outwards from said first side of said one groove region (342), said cutting edge section (34312) being connected to said connecting section (34311) and extending inclinedly in an extension direction opposite to said shank (32), with said cutting edge section (34312) of one cutting unit (3431) and another cutting edge section (34312) of another cutting unit (3431) converging at said end portion (3411), wherein each said second join wall (3433) is formed between each said first join wall (3432) and said other cutting unit (3431) to allow each said first join wall (3432) and each said second join wall (3433) to be respectively formed without touching said end portion (3411), said connecting section (34311) and said cutting edge section (34312) of said one cutting unit (3431) converging at one junction (P1), another connecting section (34311) and said other cutting edge section (34312) of said other cutting unit (3431) converging at another junction (P1), said first distance (L1) being defined from said one junction (P1) to said other junction (P1); and
each said first join wall (3432) having a slanted surface inclined to said central axis (C1), with said slanted surface inclined towards said central axis (C1), thereby allowing a thickness (T1) of said drill body (341) to be gradually reduced towards said end portion (3411) when viewed from said cutting edge section (34312).

2. The screw (3) according to claim 1, wherein each of said groove regions (342) includes a first groove wall (3421a) joined to an outer periphery of said drill body (341) and a second groove wall (3421b) connected to said first groove wall (3421a), with said first side defined by said first groove wall (3421a), said second side defined by said second groove wall (3421b), said connecting section (34311) of said cutting unit (3431) extending outwards from said first groove wall (3421a), and said first join wall (3432) being connected to said second groove wall (3421b).

3. The screw (3) according to claim 1 or 2, wherein said connecting section (34311) is curved in shape.

4. The screw (3) according to any one of claims 1 to 3, wherein said cutting edge section (34312) including a cutting edge (34312a) extending inclinedly in said extension direction and a trailing wall (34312b) joined to said cutting edge (34312a) and extending in a direction opposite to said one groove region (342), with said cutting edge (34312a) of said cutting edge section (34312) and another cutting edge (34312a) of said other cutting edge section (34312) converging at said end portion (3411).

5. The screw (3) according to any one of claims 1 to 4, wherein said second join wall (3433) is inclined to said central axis (C1).

6. The screw (3) according to any one of claims 1 to 5, wherein said thread unit (33) is connected to said one groove region (342).

7. The screw (3) according to any one of claims 1 to 6, wherein a plurality of curved recesses (311) are formed on an underside of said head (31), a connecting edge (312) being formed between two adjacent recesses (311).

8. The screw (3) according to any one of claims 1 to 7, wherein an auxiliary portion (4) is spirally disposed on said shank (32) and located between said thread unit (33) and said head (31), a spiral angle (a2) defined by said auxiliary portion (4) being different from a spiral angle (a1) defined by said thread unit (33).

9. The screw (3) according to any one of claims 1 to 8, wherein said thread unit (33) includes a plurality of threads (331) spirally winding around said outer periphery of said shank (32), a plurality of ribs (5) being located between said threads (331) and formed by protruding outwards from said outer periphery of said shank (32).

10. The screw (3) according to any one of claims 1 to 9, wherein said thread unit (33) includes a plurality of threads (331) spirally winding around said outer periphery of said shank (32), a plurality of notches (332) being formed on said threads (331) .

## Patentansprüche

1. - Schraube (3), umfassend:
einen Kopf (31);
einen Schaft (32), der sich in Längsrichtung von dem Kopf (31) erstreckt und eine Mittelachse (C1) definiert, wobei ein Außenumfang des Schafts (32) einen Außendurchmesser (OD) definiert;
eine Gewindeeinheit (33), die spiralförmig auf dem Schaft (32) angeordnet ist; und
einen Bohrabschnitt (34), der mit dem Schaft (32) verbunden ist;
wobei der Bohrabschnitt (34) einen Bohrkörper (341), der mit dem Schaft (32) verbunden ist, zwei gegenüberliegende Rillenregionen (342), die in dem Bohrkörper (341) ausgespart sind, und zwei gegenüberliegende Bohrregionen (343), die an dem Bohrkörper (341) gebildet sind, beinhaltet, der Bohrkörper (341) einen Endabschnitt (3411) beinhaltet, der sich in einem gegenüberliegenden Verhältnis zu dem Schaft (32) befindet, jede der Rillenregionen (342) mindestens eine Rillenwand (3421) beinhaltet, jede der Bohrregionen (343) eine Schneideinheit (3431) beinhaltet, die einen ersten Abstand (L1) definiert, der größer ist als der Außendurchmesser (OD) des Schafts (32), wobei die Schneideinheit (3431) einen Schneidkantenbereich (34312) beinhaltet, der auf einer ersten Seite einer der Rillenregionen (342) gebildet ist,
wobei jede der Bohrregionen (343) eine erste Verbindungswand (3432), die mit einer zweiten Seite der einen Rillenregion (342) verbunden ist, und eine zweite Verbindungswand (3433), die zwischen der ersten Verbindungswand (3432) und einer anderen der Rillenregionen (342) gebildet ist, beinhaltet, wobei die erste Verbindungswand (3432) mit der zweiten Verbindungswand (3433) verbunden ist und sich in Richtung des Endabschnitts (3411) erstreckt, die Schneideinheit (3431) einen Verbindungsabschnitt (34311) beinhaltet, der sich von der ersten Seite der einen Rillenregion (342) auswärts erstreckt, wobei der Schneidkantenbereich (34312) mit dem Verbindungsabschnitt (34311) verbunden ist und sich schräg in einer Erstreckungsrichtung entgegengesetzt zu dem Schaft (32) erstreckt, wobei der Schneidkantenbereich (34312) einer Schneideinheit (3431) und ein anderer Schneidkantenbereich (34312) einer anderen Schneideinheit (3431) an dem Endabschnitt (3411) konvergieren,
wobei jede zweite Verbindungswand (3433) zwischen jeder ersten Verbindungswand (3432) und der anderen Schneideinheit (3431) gebildet ist, um zu ermöglichen, dass jede erste Verbindungswand (3432) und jede zweite Verbindungswand (3433) jeweils gebildet sind, ohne den Endabschnitt (3411) zu berühren, wobei der Verbindungsbereich (34311) und der Schneidkantenbereich (34312) der einen Schneideinheit (3431) an einer Verbindungsstelle (P1) konvergieren, ein anderer Verbindungsbereich (34311) und der andere Schneidkantenbereich (34312) der anderen Schneideinheit (3431) an einer anderen Verbindungsstelle (P1) konvergieren, wobei der erste Abstand (L1) von der einen Verbindungsstelle (P1) zu der anderen Verbindungsstelle (P1) definiert ist; und
wobei jede erste Verbindungswand (3432) eine schräge, zu der Mittelachse (C1) geneigte Fläche aufweist, wobei die schräge Fläche zu der Mittelachse (C1) hin geneigt ist, was ermöglicht, dass eine Stärke (T1) des Bohrkörpers (341) von dem Schneidkantenbereich (34312) aus gesehen in Richtung des Endabschnitts (3411) allmählich reduziert werden.

2. - Schraube (3) nach Anspruch 1, wobei jeder der Rillenbereiche (342) eine erste Rillenwand (3421a), die mit einem Außenumfang des Bohrkörpers (341) verbunden ist, und eine zweite Rillenwand (3421b), die mit der ersten Rillenwand (3421a) verbunden ist, beinhaltet, wobei die erste Seite durch die erste Rillenwand (3421a) definiert ist, die zweite Seite durch die zweite Rillenwand (3421b) definiert ist, sich der Verbindungsbereich (34311) der Schneideeinheit (3431) von der ersten Rillenwand (3421a) auswärts erstreckt, und wobei die erste Verbindungswand (3432) mit der zweiten Rillenwand (3421b) verbunden ist.

3. - Schraube (3) nach Anspruch 1 oder 2, wobei der Verbindungsbereich (34311) in gekrümmter Form ist.

4. - Schraube (3) nach einem der Ansprüche 1 bis 3, wobei der Schneidkantenbereich (34312) eine Schneidkante (34312a), die sich geneigt in die Erstreckungsrichtung erstreckt, und eine hintere Wand (34312b), die mit der Schneidkante (34312a) verbunden ist und sich in einer Richtung entgegengesetzt zu der einen Rillenregion (342) erstreckt, beinhaltet, wobei die Schneidkante (34312a) des Schneidkantenbereichs (34312) und eine andere Schneidkante (34312a) des anderen Schneidkantenbereichs (34312) an dem Endabschnitt (3411) konvergieren.

5. - Schraube (3) nach einem der Ansprüche 1 bis 4, wobei die zweite Verbindungswand (3433) zu der Mittelachse (C1) geneigt ist.

6. - Schraube (3) nach einem der Ansprüche 1 bis 5, wobei die Gewindeeinheit (33) mit der einen Rillenregion (342) verbunden ist.

7. - Schraube (3) nach einem der Ansprüche 1 bis 6, wobei eine Vielzahl von gekrümmten Aussparungen (311) an einer Unterseite des Kopfs (31) gebildet sind, wobei eine Verbindungskante (312) zwischen zwei benachbarten Aussparungen (311) gebildet ist.

8. - Schraube (3) nach einem der Ansprüche 1 bis 7, wobei ein Hilfsabschnitt (4) spiralförmig auf dem Schaft (32) angeordnet ist und sich zwischen der Gewindeeinheit (33) und dem Kopf (31) befindet, ein Spiralwinkel (a2), der durch den Hilfsabschnitt (4) definiert ist, sich von einem Spiralwinkel (a1) unterscheidet, der durch die Gewindeeinheit (33) definiert ist.

9. - Schraube (3) nach einem der Ansprüche 1 bis 8, wobei die Gewindeeinheit (33) eine Vielzahl von Gewinden (331) beinhaltet, die sich spiralförmig um den Außenumfang des Schafts (32) winden, eine Vielzahl von Rippen (5), die sich zwischen den Gewinden (331) befinden und dadurch gebildet sind, dass sie von dem Außenumfang des Schafts (32) auswärts hervorstehen.

10. - Schraube (3) nach einem der Ansprüche 1 bis 9, wobei die Gewindeeinheit (33) eine Vielzahl von Gewinden (331) beinhaltet, die sich spiralförmig um den Außenumfang des Schafts (32) winden, wobei eine Vielzahl von Kerben (332) an den Gewinden (331) gebildet sind.

## Revendications

1. - Vis (3) comprenant :
une tête (31) ;
une tige (32) s'étendant longitudinalement à partir de ladite tête (31) et définissant un axe central (C1), une périphérie externe de ladite tige (32) définissant un diamètre externe (OD) ;
une unité de filetage (33) disposée en spirale sur ladite tige (32) ; et
une partie de perçage (34) reliée à ladite tige (32) ;
dans laquelle ladite partie de perçage (34) comprend un corps de perçage (341) relié à ladite tige (32), deux régions de rainure opposées (342) en retrait dans ledit corps de perçage (341), et deux régions de perçage opposées (343) formées sur ledit corps de perçage (341), ledit corps de perçage (341) comprenant une partie d'extrémité (3411) située dans une relation d'opposition par rapport à ladite tige (32), chacune desdites régions de rainure (342) comprenant au moins une paroi de rainure (3421), chacune desdites régions de perçage (343) comprenant une unité de coupe (3431) définissant une première distance (L1) qui est supérieure audit diamètre externe (OD) de ladite tige (32), ladite unité de coupe (3431) comprenant une section de bord de coupe (34312) formée sur un premier côté de l'une desdites régions de rainure (342),
dans laquelle chacune desdites régions de perçage (343) comprend une première paroi de jonction (3432) reliée à un second côté de ladite région de rainure (342), et une seconde paroi de jonction (3433) formée entre ladite première paroi de jonction (3432) et une autre desdites régions de rainure (342), ladite première paroi de jonction (3432) étant reliée à ladite seconde paroi de jonction (3433) et s'étendant dans la direction de ladite partie d'extrémité (3411), ladite unité de coupe (3431) comprenant une section de liaison (34311) s'étendant vers l'extérieur à partir dudit premier côté de ladite région de rainure (342), ladite section de bord de coupe (34312) étant reliée à ladite section de liaison (34311) et s'étendant de manière inclinée dans une direction d'extension opposée à ladite tige (32), ladite section de bord de coupe (34312) d'une unité de coupe (3431) et une autre section de bord de coupe (34312) d'une autre unité de coupe (3431) convergeant à ladite partie d'extrémité (3411),
dans laquelle chacune desdites secondes parois de jonction (3433) est formée entre chacune desdites premières parois de jonction (3432) et ladite autre unité de coupe (3431) pour permettre à chacune desdites premières parois de jonction (3432) et à chacune desdites secondes parois de jonction (3433) d'être respectivement formées sans toucher ladite partie d'extrémité (3411), ladite section de liaison (34311) et ladite section de bord de coupe (34312) de ladite unité de coupe (3431) convergeant à une jonction (P1), une autre section de liaison (34311) et ladite autre section de bord de coupe (34312) de ladite autre unité de coupe (3431) convergeant à une autre jonction (P1), ladite première distance (L1) étant définie de ladite jonction (P1) à ladite autre jonction (P1) ; et
chacune desdites premières parois de jonction (3432) ayant une surface oblique, inclinée vers ledit axe central (C1), ladite surface oblique étant inclinée vers ledit axe central (C1), permettant ainsi de réduire progressivement une épaisseur (T1) dudit corps de perçage (341) vers ladite partie d'extrémité (3411), lorsqu'elle est vue à partir de ladite section de bord de coupe (34312).

2. - Vis (3) selon la revendication 1, dans laquelle chacune desdites zones de rainure (342) comprend une première paroi de rainure (3421a) reliée à une périphérie externe dudit corps de perçage (341) et une seconde paroi de rainure (3421b) reliée à ladite première paroi de rainure (3421a), avec ledit premier côté défini par ladite première paroi de rainure (3421a), ledit second côté défini par ladite seconde paroi de rainure (3421b), ladite section de liaison (34311) de ladite unité de coupe (3431) s'étendant vers l'extérieur à partir de ladite première paroi de rainure (3421a), et ladite première paroi de jonction (3432) étant reliée à ladite seconde paroi de rainure (3421b).

3. - Vis (3) selon la revendication 1 ou 2, dans laquelle ladite section de liaison (34311) est de forme incurvée.

4. - Vis (3) selon l'une quelconque des revendications 1 à 3, dans laquelle ladite section de bord de coupe (34312) comprend un bord de coupe (34312a) s'étendant de manière inclinée dans ladite direction d'extension et une paroi arrière (34312b) reliée audit bord de coupe (34312a) et s'étendant dans une direction opposée à ladite région de rainure (342), avec ledit bord de coupe (34312a) de ladite section de bord de coupe (34312) et un autre bord de coupe (34312a) de ladite autre section de bord de coupe (34312) convergeant à ladite partie d'extrémité (3411).

5. - Vis (3) selon l'une quelconque des revendications 1 à 4, dans laquelle ladite seconde paroi de jonction (3433) est inclinée par rapport audit axe central (C1) .

6. - Vis (3) selon l'une quelconque des revendications 1 à 5, dans laquelle ladite unité de filetage (33) est reliée à ladite région de rainure (342).

7. - Vis (3) selon l'une quelconque des revendications 1 à 6, dans laquelle plusieurs évidements incurvés (311) sont formés sur une face inférieure de ladite tête (31), un bord de liaison (312) étant formé entre deux évidements adjacents (311).

8. - Vis (3) selon l'une quelconque des revendications 1 à 7, dans laquelle une partie auxiliaire (4) est disposée en spirale sur ladite tige (32) et située entre ladite unité de filetage (33) et ladite tête (31), un angle de spirale (a2) défini par ladite partie auxiliaire (4) étant différent d'un angle de spirale (a1) défini par ladite unité de filetage (33).

9. - Vis (3) selon l'une quelconque des revendications 1 à 8, dans laquelle ladite unité de filetage (33) comprend plusieurs filets (331) s'enroulant en spirale autour de ladite périphérie externe de ladite tige (32), plusieurs nervures (5) étant situées entre lesdits filets (331) et formées en faisant saillie vers l'extérieur à partir de ladite périphérie externe de ladite tige (32).

10. - Vis (3) selon l'une quelconque des revendications 1 à 9, dans laquelle ladite unité de filetage (33) comprend plusieurs filets (331) s'enroulant en spirale autour de ladite périphérie externe de ladite tige (32), plusieurs encoches (332) étant formées sur lesdits filets (331).
